# EUROPÄISCHE PATENTSCHRIFT

(11) **EP 2 829 848 B1**
(45) Veröffentlichungstag und Bekanntmachung des Hinweises auf die Patenterteilung: **09.12.2015**
(21) Anmeldenummer: 14174512.5
(22) Anmeldetag: 26.06.2014
(51) Int. Cl.: G01D 11/30

(54) **Sensor mit Sensorhalterung und darin integriertem Parameterspeicher**
Sensor with sensor holder an therein integrated memory for sensor parameters
Capteur avec support de capteur et mémoire integrée pour sauvegarde les paramètres

(30) Priorität: 24.07.2013 DE 102013214463
(43) Veröffentlichungstag der Anmeldung: 28.01.2015
(73) Patentinhaber: SICK AG, 79183 Waldkirch/Breisgau (DE)
(72) Erfinder: Torabi, Bahram, Dr., 79100 Freiburg (DE)
(74) Vertreter: Manitz, Finsterwald & Partner GbR

(56) Entgegenhaltungen:
- EP-A1- 1 978 378
- DE-A1- 10 329 043
- DE-A1- 19 839 564
- DE-A1-102007 021 138
- DE-C1- 19 842 351

## Beschreibung

Die vorliegende Erfindung betrifft eine Sensoranordnung mit wenigstens einem, insbesondere optoelektronischen, Sensor, und einer Halterung, an welcher der Sensor lösbar fixierbar ist.

Derartige Sensoranordnungen werden in vielen Bereichen der Industrie für Prüf-, Überwachungs- und Steuerungsaufgaben aller Art eingesetzt. Die Halterung dient dazu, den üblicherweise in einem Gehäuse untergebrachten Sensor in einer vorgegebenen Position und Ausrichtung an einer Wand, einer Maschine, einer Transporteinrichtung oder dergleichen anzubringen. Die Halterung kann z.B. als einfaches Lochblech ausgestaltet sein, welches eine Aufnahme für das Sensorgehäuse bereitstellt. Es sind jedoch auch vergleichsweise große und komplexe Halterungen in Form von Rahmen oder Gestellen bekannt. Häufig dient auch ein und dieselbe Halterung zur Anbringung mehrerer Sensoren.

Unabhängig von der Art der Halterung gestaltet sich in der Praxis die Montage und die Inbetriebnahme eines Sensorsystems häufig relativ aufwändig. Beispielsweise muss die Ausrichtung des Sensors relativ zu der Halterung bzw. relativ zu einer ortsfesten Bezugsfläche wie einer Wand in Abhängigkeit von der jeweiligen Anwendung exakt justiert werden. Weiterhin müssen im Allgemeinen die Betriebsparameter des Sensors wie die Scanrate oder das Sichtfeld jeweils vor Ort in Abhängigkeit von der konkreten Einbausituation auf jeweilige Optimalwerte gesetzt werden. Je nach Anwendung kann dies mit einem beträchtlichen Aufwand verbunden sein. Falls der Sensor ausfällt und gegen einen neuen Sensor auszutauschen ist, müssen die aufwändigen Justier- und Parametriervorgänge von neuem durchgeführt werden. Erschwerend wirkt sich dabei der Umstand aus, dass die optische Achse eines optoelektronischen Sensors in Bezug auf die Geometrie des Sensorgehäuses - z.B. in Bezug auf die Symmetrieachse eines zylindrischen Sensorgehäuses - herstellungsbedingt variieren kann. Somit ist im Allgemeinen nicht davon auszugehen, dass die Ausrichtung einer fest montierten Halterung für einen neu einzusetzenden Sensor korrekt ist. Weiterhin ist es für einen Bediener oft lästig, einen neu in eine Halterung einzusetzenden Sensor zu verkabeln, also in korrekter Weise mit den zugehörigen Stromanschluss- und Datenleitungen zu verbinden. All dies führt dazu, dass ein Sensoraustausch oder die Inbetriebnahme eines zusätzlichen Sensors im Umfeld einer bestehenden Anlage mit erheblichen Stillstandzeiten verbunden ist. Darunter leidet letztlich die Wirtschaftlichkeit der Anlage.

Die DE 103 29 043 A1 offenbart einen Entfernungssensor, der mittels einer Befestigungsvorrichtung in Form eines Haltewinkels an einer stationären Einheit montiert ist. In den Haltewinkel ist eine Anschalteinheit integriert, welche eine Rechnereinheit aufweist und über eine Schnittstelle mit dem Sensor kommunizieren kann.

Es ist eine Aufgabe der Erfindung, eine Sensoranordnung anzugeben, welche leicht zu installieren, leicht zu warten und leicht umzukonfigurieren ist.

Die Lösung der Aufgabe erfolgt durch eine Sensoranordnung mit den Merkmalen des Anspruchs 1.

Bei einer erfindungsgemäßen Sensoranordnung ist an der Halterung eine Speichereinrichtung zum Ablegen von Informationen vorgesehen, wobei erste Kommunikationsmittel zum Übermitteln wenigstens einer sensorbezogenen Information des Sensors an die Halterung und zum Ablegen der übermittelten Information in der Speichereinrichtung vorgesehen sind, und wobei zweite Kommunikationsmittel zum Auslesen einer abgelegten Information aus der Speichereinrichtung und zum Übermitteln der ausgelesenen Information an eine Auswertungseinrichtung des Sensors oder der Halterung vorgesehen sind. Die Auswertungseinrichtung ist dazu ausgebildet, in Abhängigkeit von der übermittelten Information wenigstens eine Abgleichfunktion am Sensor und/oder an der Halterung auszulösen.

Die Halterung ist also nicht auf eine rein mechanische Befestigungsfunktion beschränkt, sondern bietet zusätzlich die Möglichkeit für einen anwendungsbezogenen Informationsaustausch zwischen Sensor und Halterung. Aufgrund der zwischen dem Sensor und der Halterung ermöglichten Kommunikation kann eine vereinfachte Installation des Sensors in der Halterung unter Zuhilfenahme der in oder an der Halterung abgespeicherten Information erfolgen. Beispielsweise kann in der Speichereinrichtung ein Wert für einen Betriebsparameter des Sensors abgelegt werden, welcher sich bei der Erstinbetriebnahme des Systems für die spezielle Einbausituation als besonders günstig herausgestellt hat. Bei einem Sensoraustausch kann dem neu einzusetzenden Sensor dieser Parameterwert übermittelt werden, so dass der Wert nicht von neuem bestimmt werden muss. Dies ermöglicht einen teilweise oder vollständig automatisierten Abgleich von neu zu installierenden Sensoren und somit eine Verringerung und/oder Verkürzung unerwünschter Stillstandzeiten bei der zugehörigen Anlage.

Die Erfindung sieht vor, dass das Auslösen der Abgleichfunktion ein Anpassen einer Ausrichtung des Sensors relativ zu der Halterung und/oder ein Anpassen einer Ausrichtung der Halterung relativ zu einer ortsfesten Referenzfläche umfasst. Im Allgemeinen variieren Sensoren einer bestimmten Baureihe hinsichtlich der Ausrichtung ihrer optischen Achse relativ zu den Außenabmessungen des Gehäuses, das heißt gleichartige Sensoren "schielen" jeweils um geringfügige, individuelle Beträge. Dies führt dazu, dass die für einen bestimmten Sensor im Rahmen des Installationsvorgangs vorgenommene Positionierung für einen anderen Sensor im Allgemeinen nicht stimmt. Aufgrund der Kommunikationsmöglichkeit zwischen Sensor und Halterung kann dieses Problem gelöst werden. Speziell kann der neue Sensor seine individuelle Ausrichtung, also z.B. seinen "Schielwinkel", an die Auswertungseinrichtung ausgeben, so dass diese dann einen geeigneten Kompensationswert ermitteln kann.

Zum Anpassen der Ausrichtung ist erfindungsgemäß eine Verstelleinrichtung am Sensor oder an der Halterung vorgesehen, mittels welcher die Ausrichtung der Halterung oder eines an der Halterung fixierten Sensors verstellbar ist. Mit Hilfe einer solchen Verstelleinrichtung kann auf einfache Weise und insbesondere ohne Lösen der Halterung vom zugehörigen Montageort eine Neuausrichtung eines Sensors und insbesondere eine Kompensation des vorstehend genannten individuellen Schielens eines neu installierten Sensors erfolgen.

Weiterbildungen der Erfindung sind in den abhängigen Ansprüchen, der Beschreibung sowie der beigefügten Zeichnung angegeben.

Die Auswertungseinrichtung kann dazu ausgebildet sein, die Abgleichfunktion lediglich bei Vorliegen eines Inbetriebnahme-Kriteriums auszulösen. Dies trägt dem Umstand Rechnung, dass ein Sensorabgleich in der Regel lediglich bei einer Neuinstallation oder bei einem Sensoraustausch erforderlich ist. Die Halterung kann also während des laufenden Sensorbetriebs in üblicher Weise ausschließlich der mechanischen Befestigung dienen und bei Vorliegen des Inbetriebnahme-Kriteriums in einen Abgleichvorgang einbezogen werden. Auf diese Weise wird ein überflüssiges Kommunizieren zwischen Sensor und Halterung vermieden, während gleichzeitig sichergestellt ist, dass jeder neu in die Halterung eingesetzte Sensor abgeglichen wird. Das Inbetriebnahme-Kriterium könnte beispielsweise darin bestehen, dass ein Bediener eine gewünschte Inbetriebnahme eines neuen Sensors per Knopfdruck oder dergleichen signalisiert.

Weiterhin kann die Auswertungseinrichtung dazu ausgebildet sein, die Abgleichfunktion in Abhängigkeit eines Vergleichs einer aus der Speichereinrichtung ausgelesenen Alt-Information und einer durch die ersten Kommunikationsmittel an die Halterung übermittelten Neu-Information auszulösen. Es kann nämlich aus unterschiedlichen Gründen günstig sein - wie weiter unten an einem Beispiel dargelegt werden wird - bei einem im Rahmen eines Sensoraustauschs durchzuführenden Abgleich nicht nur spezifische Eigenschaften des neu bereitgestellten Sensors, sondern auch sich auf den zuvor eingebauten Sensor und/oder die Halterung beziehende Informationen zu berücksichtigen. Die Möglichkeiten zum automatischen Abgleichen eines neu installierten Sensors werden somit beträchtlich erweitert.

Gemäß einer Ausführungsform der Erfindung umfasst das Auslösen der Abgleichfunktion ein Anpassen eines Betriebsparameters des Sensors, wie z.B. einer Scanrate, einer Scandichte und/oder eines Sichtfeldes eines Scanners. Beispielsweise muss häufig das Sichtfeld eines Laserscanners in relativ aufwändiger Weise vor Ort angepasst werden. Eine automatische Anpassung des Sichtfeldes eines neu einzusetzenden Sensors unter Abrufen eines zuvor abgespeicherten Sichtfeld-Werts kann hier Abhilfe schaffen.

Eine andere Ausführungsform der Erfindung sieht vor, dass das Auslösen der Abgleichfunktion ein Darstellen einer durch die ersten Kommunikationsmittel oder die zweiten Kommunikationsmittel übermittelten Information und/oder einer aus der übermittelten Information abgeleiteten Auswertungs-Information auf einer Anzeige des Sensors und/oder der Halterung umfasst. Ein Bediener kann dann bei der Montage die angezeigte Information - z.B. eine Positions- oder Richtungsangabe und/oder einen Parameterwert - ablesen und die betreffende Einstellung am Sensor und/oder an der Halterung selbst vornehmen. Hierdurch können die Kosten für eine automatische Stellvorrichtung vermieden werden.

Es können auch Mittel zum Ablegen einer aktuellen Stellung der Verstelleinrichtung in der Speichereinrichtung vorgesehen sein. Beispielsweise kann eine Signalverbindung zwischen der Verstelleinrichtung und einem Schreibkopf zum Beschreiben der Speichereinrichtung bestehen. Es spielt hierbei keine Rolle, ob ein solcher Schreibkopf am Sensor oder an der Halterung vorgesehen ist. Auf diese Weise kann die während der Installation ermittelte Justierungseinstellung für den Sensor direkt an der Halterung gesichert werden.

Die Verstelleinrichtung kann auch einen Antrieb aufweisen, wobei die Auswertungseinrichtung dazu ausgebildet ist, den Antrieb der Verstelleinrichtung in Abhängigkeit von einer durch die ersten Kommunikationsmittel oder die zweiten Kommunikationsmittel übermittelten Information anzusteuern. Auf diese Weise kann eine vollautomatische Ausrichtung eines neu zu installierenden Sensors erfolgen. Ein Austausch eines Sensors ist dann gewissermaßen "narrensicher" und kann dementsprechend schnell erfolgen. Speziell ausgebildetes Personal ist hierfür nicht erforderlich.

Die Verstelleinrichtung kann jedoch auch manuell betätigbar sein, wobei Mittel zum Ermitteln sowie zum Anzeigen der aktuellen Ausrichtung des Sensors oder der Halterung vorgesehen sind. Ein Bediener kann dann die Verstelleinrichtung unter Beachten der Anzeige so lange betätigen, bis die gewünschte Ausrichtung des Sensors oder der Halterung erzielt ist.

Anstelle einer Ausrichtung des Sensors durch Bewegen seines Gehäuses oder der zugehörigen Halterung kann auch eine rein elektronische Ausrichtung erfolgen. Beispielsweise könnte das Sichtfeld eines Sensors auf elektronischem Wege einstellbar sein, indem die auszuwertenden Bildelemente eines Bildfeldes, z.B. eines CCD-Arrays, individuell festgelegt werden. Eine etwaige Fehlausrichtung des Sensors kann dann ohne mechanische Bewegung dadurch kompensiert werden, dass eine andere Anordnung von Bildelementen - in einem vereinfachten Beispiel: "nur die linke Hälfte des Bildfeldes" - zur Auswertung herangezogen wird. Die Information hinsichtlich der auszuwertenden Bildelemente kann dann in der Speichereinrichtung abgelegt werden.

Die ersten Kommunikationsmittel und/oder die zweiten Kommunikationsmittel können zum berührungslosen Übermitteln von Informationen ausgebildet sein. Beispielsweise können am Sensor und an der Halterung entsprechende Sende-/Empfangseinheiten zum drahtlosen Austausch von Signalen, beispielsweise mittels Funkwellen oder Infrarotwellen, vorgesehen sein.

Insbesondere können die ersten Kommunikationsmittel und/oder die zweiten Kommunikationsmittel auf einer lokalen Funkverbindung zwischen dem Sensor und der Halterung, insbesondere einer WLAN-Verbindung oder einer NFC-Verbindung, beruhen. Komponenten zum Errichten einer lokalen Funkverbindung sind relativ kostengünstig. Ein Verkabeln des Sensors mit der Halterung zum Zweck des Informationsaustauschs ist bei Bereitstellung einer solchen lokalen Funkverbindung nicht erforderlich.

Eine drahtlose Kommunikation ist jedoch nicht zwingend. Vielmehr können die ersten Kommunikationsmittel und/oder die zweiten Kommunikationsmittel prinzipiell zum Übermitteln von Informationen auch über einander berührende Kontaktflächen des Sensors und der Halterung ausgebildet sein, um so z.B. die Herstellungskosten gering zu halten.

Die Speichereinrichtung kann wenigstens einen RFID-Transponder umfassen, welcher vorzugsweise direkt auf die Halterung aufgebracht ist. Derartige Bauelemente stellen besonders kostengünstige Speichereinrichtungen dar und können in Form von sogenannten "Tags" relativ einfach auf eine Vielzahl von Oberflächen aufgebracht werden.

Vorzugsweise ist der RFID-Transponder durch eine kombinierte Schreib-/Leseeinheit des Sensors beschreibbar und auslesbar. Der Sensor kann somit auf effiziente Weise drahtlos mit der Speichereinrichtung der Halterung kommunizieren.

Die Speichereinrichtung kann auch eine auswechselbare Speicherkarte, insbesondere eine SD-Karte, umfassen, welche in eine Kartenaufnahme der Halterung einführbar ist. Im Vergleich zu einem RFID-Transponder weist eine solche Speicherkarte eine höhere Speicherkapazität auf. Die Auswechselbarkeit kann außerdem dazu genutzt werden, Informationen bei Bedarf von einer Halterung auf eine andere Halterung zu übertragen.

Eine weitere Ausführungsform der Erfindung sieht vor, dass die Halterung einen, insbesondere als Kabelanschluss ausgeführten, Stromanschluss zur Versorgung des Sensors mit elektrischer Energie aufweist. Mit anderen Worten erfolgt die Stromversorgung des Sensors nicht wie üblich über das Sensorgehäuse, sondern über die Halterung. Beim Einbauen eines Sensors in die Halterung muss dieser somit nicht mit der zugehörigen Stromquelle verkabelt werden, wodurch beim Installieren Zeit gespart werden kann.

Bein einer Ausgestaltung können die zweiten Kommunikationsmittel dazu ausgebildet sein, als Zusatzfunktion elektrische Energie von dem Stromanschluss der Halterung zu einer Versorgungseinheit des Sensors zu übertragen.

Ferner kann die Halterung einen, insbesondere als Kabelanschluss ausgeführten, Applikationsdatenanschluss zur Übermittlung von anwendungsspezifischen Daten an den Sensor aufweisen, wobei die ersten Kommunikationsmittel zusätzlich dazu ausgebildet sind, anwendungsspezifische Daten von dem Applikationsanschluss der Halterung zu einer Empfangseinheit des Sensors zu übertragen. Bei den anwendungsspezifischen Daten kann es sich um gängige Betriebsparameter wie zum Beispiel die Scanrate oder die Scandichte eines Laserscanners handeln. Die ersten Kommunikationsmittel können auf diese Weise in zweifacher Hinsicht genutzt werden.

Die ersten Kommunikationsmittel können ferner dazu ausgebildet sein, von dem Sensor ermittelte Messdaten an einen an der Halterung vorgesehenen, insbesondere als Kabelanschluss ausgeführten, Messdatenanschluss zu übertragen, wobei der Messdatenanschluss zur Weiterleitung der Messdaten an eine nachgeordnete Verarbeitungseinrichtung ausgebildet ist. Die ersten Kommunikationsmittel, welche ohnehin eine Signalverbindung zwischen dem Sensor und der Halterung bereitstellen, werden somit zur Übertragung des von dem Sensor ausgegebenen Signals genutzt. Gemäß einer bevorzugten Ausgestaltung der Erfindung erfolgen sowohl die Messdatenübertragung als auch die Applikationsdatenübertragung sowie die Stromversorgung über die Halterung. Bei der Installation eines Sensors müssen dann überhaupt keine Verkabelungen vorgenommen werden. Vielmehr ist der Sensor lediglich in oder an der Halterung anzubringen, z.B. durch einfaches Stecken, Klemmen oder Schrauben, wobei dann die Stromversorgung und die Signalverbindung automatisch bereitgestellt ist. Der Installationsaufwand für Sensorsysteme kann hierdurch auf ein Minimum reduziert werden.

Die Halterung kann eine Aufnahme für ein Gehäuse des Sensors aufweisen. Viele Sensoren weisen ein zumindest abschnittsweise zylindrisches Gehäuse auf, welches leicht in eine, beispielsweise in einem platten- oder profilartigen Bauteil vorgesehene, Rundaufnahme eingesetzt und in dieser fixiert werden kann.

Es können auch wenigstens zwei Sensoren an der Halterung lösbar fixierbar sein. Eine derartige Halterung ermöglicht den gleichzeitigen Einbau mehrerer Sensoren.

Die Erfindung wird nachfolgend beispielhaft unter Bezugnahme auf die Zeichnung beschrieben.
- Fig. 1: ist eine vereinfachte Seitenansicht einer Sensoranordnung gemäß einer ersten Ausführungsform der Erfindung.
- Fig. 2: ist eine vereinfachte Seitenansicht einer Sensoranordnung gemäß einer zweiten Ausführungsform der Erfindung.

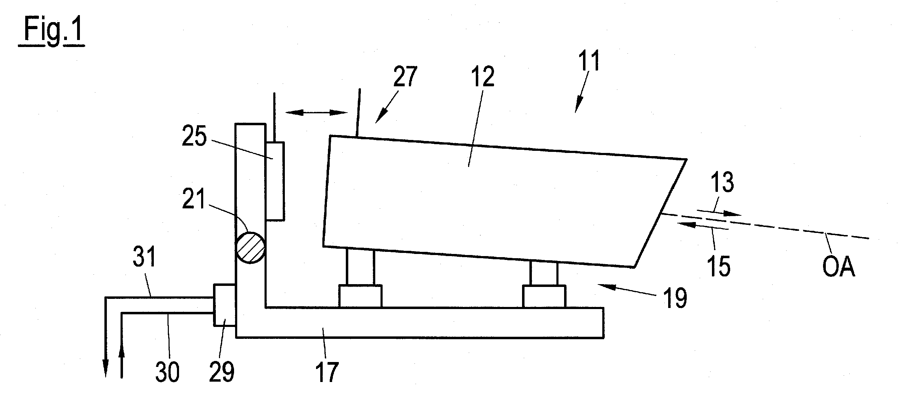

Der in Fig. 1 dargestellte optoelektronische Sensor 11, beispielsweise eine Lichtschranke, ist dazu ausgebildet, entlang einer optischen Achse OA in an sich bekannter Weise Sendelichtstrahlen 13 auszusenden und Empfangslichtstrahlen 15 zu empfangen. Der Sensor 11 weist ein Gehäuse 12 auf und ist an einer Halterung 17 montiert, die hier als starres L-Profil ausgeführt ist. Mittels einer Verstelleinrichtung 19 ist die Position des Sensors 11 an der Halterung 17 und insbesondere die relative Lage der optischen Achse OA in Bezug auf eine nicht dargestellte Referenzachse einstellbar. Die Verstelleinrichtung 19 kann manuell betätigbar sein, beispielsweise über Justierschrauben. Alternativ kann es sich um eine elektrisch oder pneumatisch angetriebene Verstelleinrichtung 19 handeln. Beim gezeigten Beispiel ist die Verstelleinrichtung 19 dazu ausgebildet, den Sensor 11 ausgehend von einer Neutralstellung an wenigstens zwei voneinander beabstandeten Stellen sowohl nach links und rechts als auch nach oben und unten zu bewegen. Die Halterung 17 kann mittels nicht dargestellter Befestigungslöcher an einem stationären Anlagenbauteil, Montagerahmen oder dergleichen angebracht werden. Ein auf einer Seitenfläche der Halterung 17 aufgebrachter RFID-Transponder 21 dient dazu, Informationen, welche den Sensor 11 oder die Halterung 17 betreffen, für eine spätere Verwendung abzuspeichern. Der zum Beschreiben und zum Auslesen des RFID-Transponders 21 vorgesehene Schreib-/Lesekopf kann sich wahlweise am Sensor 11 oder an der Halterung 17 befinden und ist in Fig. 1 nicht eigens dargestellt.

Eine an der Halterung 17 angebrachte Sende-/Empfangseinheit 25 sowie eine in den Sensor 11 integrierte Sende-/Empfangseinheit 27 dienen zur Errichtung einer lokalen bidirektionalen Funkverbindung zwischen dem Sensor 11 und der Halterung 17. Die Sende-/Empfangseinheiten 25, 27 können je nach Anwendungsanforderung für eine breitbandig oder für eine schmalbandige Kopplung ausgelegt sein. Über die Funkverbindung können einerseits sensorbezogene Informationen von dem Sensor 11 an die Halterung 17 übermittelt und in dem RFID-Transponder 21 abgespeichert und andererseits in dem RFID-Transponder 21 abgelegte Informationen ausgelesen und an eine nicht dargestellte Auswertungseinrichtung am Sensor 11 oder an der Halterung 17 übermittelt werden.

Wie dargestellt ist an der Halterung 17 ein Kabelanschluss 29 für eine Stromversorgungsleitung 30 und eine Datenleitung 31 vorgesehen. Der Sensor 11 weist demgegenüber keinen eigenen Kabelanschluss auf. Vielmehr erfolgt sowohl die Stromversorgung des Sensors 11 als auch die Messdatenübertragung über den Kabelanschluss 29 der Halterung 17, wobei die lokale Funkverbindung zwischen den Sende-/Empfangseinheiten 25, 27 zur drahtlosen Übertragung der Energie bzw. der Daten genutzt wird. Bei einer nicht dargestellten Ausführungsform erfolgt die Übertragung der Energie bzw. der Daten drahtgebunden über entsprechende Kontaktflächen oder Stecker.

Bei der Erstinbetriebnahme der in Fig. 1 dargestellten Anordnung wird zunächst die Halterung 17 grob ausgerichtet und an der zugehörigen Anlagenkomponente befestigt. Anschließend wird die optische Achse OA des Sensors 11 mittels der Verstelleinrichtung 19 durch einen Monteur justiert, bis sie eine gewünschte Lage einnimmt. Die betreffende Einstellung der Verstelleinrichtung 19 wird dann - gegebenenfalls auf einen Knopfdruck hin - über die lokale Funkverbindung an die Halterung 17 übermittelt und dort in dem RFID-Transponder 21 abgespeichert. Zusätzlich übermittelt der Sensor 11 auch eine Ausrichtung seiner optischen Achse OA relativ zu einer internen Referenzfläche, was auch als Schielwinkel bezeichnet wird, an die Halterung 17. Der individuelle Schielwinkel des Sensors 11 wird dann ebenfalls in dem RFID-Transponder 21 abgespeichert. Die Position und die Ausrichtung der optischen Achse OA des Sensors 11 relativ zu einer ortsfesten Referenzfläche, wie zum Beispiel einer zu überwachenden Wand, ist somit in dem RFID-Transponder 21 gesichert.

Bei einem Ausfall des Sensors 11 wird dieser von der Halterung 17 entfernt und ein neuer Sensor 11 wird an der Halterung 17 montiert. Dabei kann es sich insbesondere um einen Sensor 11 der gleichen Bauart handeln. Dies ist jedoch nicht zwingend, das heißt es könnte prinzipiell auch ein andersartiger Sensor 11 eingesetzt werden. Einer Auswertungseinrichtung des Sensors 11 oder der Halterung 17 wird dann signalisiert, dass eine Inbetriebnahme durchgeführt werden soll - dies kann wiederum per Knopfdruck eines Benutzers erfolgen. Der neu eingesetzte Sensor 11 wird im Allgemeinen einen anderen Schielwinkel aufweisen als der alte, entfernte Sensor 11. Jedoch ist im Allgemeinen für jeden hergestellten Sensor 11 der zugehörige Schielwinkel individuell bekannt. Somit kann anhand der in dem RFID-Transponder 21 abgespeicherten früheren Schielwinkel, der früheren Einstellungen der Verstelleinrichtung 19, sowie dem bekannten Schielwinkel des neuen Sensors 11 diejenige Einstellung der Verstelleinrichtung 19 berechnet werden, die mit einer identischen Ausrichtung der optischen Achse OA des Sensors 11 in Bezug auf die Referenzfläche einhergeht. Die Verstelleinrichtung 19 wird dann automatisch entsprechend eingestellt, so dass der neu eingesetzte Sensor 11 ohne weiteres Zutun des Bedieners korrekt ausgerichtet wird. Alternativ könnte die Einstellung für die Verstelleinrichtung 19 auch auf einer Anzeige dargestellt werden, wobei der Bediener dann die Verstellung der Verstelleinrichtung 19 manuell vornimmt. Hierbei ist es bevorzugt, dass die aktuelle Position bzw. Ausrichtung des Sensors 11 mittels geeigneter, beispielsweise kapazitiver, Lagesensoren ermittelt und bei Erreichen der gewünschten Lage bestätigt wird.

Ein ansteuerbarer Antrieb der Verstelleinrichtung 19 kann insbesondere bei der Erstinbetriebnahme einer Sensoranordnung auch dazu eingesetzt werden, eine korrekte Justierung zu finden, etwa durch Suchen eines maximalen Signals. Beispielsweise kann automatisch der gesamte Verstellbereich der Verstelleinrichtung 19 abgefahren und diejenige Einstellung, welche mit maximalem Sensorsignal einhergeht, angezeigt und/oder gespeichert werden. Bei einer nicht gezeigten Ausführungsform erfolgt eine solche Signalsuche nicht durch Bewegen des Sensors 11 relativ zu der Halterung 17, sondern durch Bewegen der Halterung 17 relativ zu einer ortsfesten Bezugsfläche wie z.B. einer Wand.

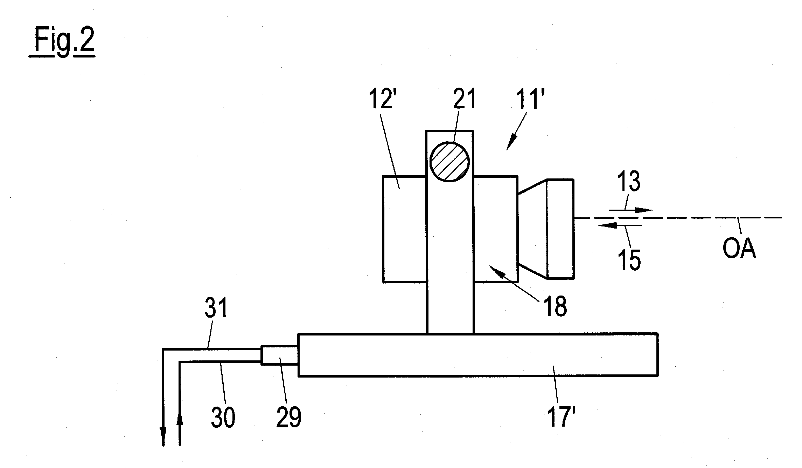

Fig. 2 zeigt eine alternative Ausführungsform einer erfindungsgemäßen Sensoranordnung, bei welcher der Sensor 11' als Laserscanner ausgebildet ist und mit dem zylindrischen hinteren Teil seines Gehäuses 12' in einer Aufnahme 18 einer Halterung 17' aufgenommen ist. Die Halterung 17' ist hier in Form eines umgedrehten "T" ausgestaltet, weist aber ebenso wie die in Fig. 1 dargestellte L-förmige Halterung 17 einen Kabelanschluss 29 für eine Versorgungsleitung 30 und eine Datenleitung 31 auf. Wie bei der in Fig. 1 dargestellten Ausführungsform ist ein RFID-Transponder 21 an der Halterung 17' vorgesehen.

Die Stromversorgung des Sensors 11' sowie die Kommunikation des Sensors 11' mit der Halterung 17' erfolgt bei der in Fig. 2 dargestellten Ausführungsform nicht drahtlos, sondern über entsprechende, nicht dargestellte elektrische Kontaktflächen des Sensors 11' und der Halterung 17'. Der Sensor 11' weist eine nicht dargestellte Einstelleinrichtung zum Einstellen des Sichtfelds und der Scanrate auf.

Bei der Erstinstallation der Sensoranordnung wird das Sichtfeld und die Scanrate des Sensors 11' durch einen Bediener in Abhängigkeit von der konkreten Einbausituation justiert. Anschließend wird - beispielsweise per Knopfdruck - signalisiert, dass die Erstinbetriebnahme abgeschlossen ist. Die Einstellung der Einstelleinrichtung, das heißt das zuletzt eingestellte Sichtfeld des Sensors 11' sowie die zuletzt eingestellte Scanrate, werden dann über die elektrischen Kontakte an die Halterung 17' übermittelt und dort mittels eines nicht dargestellten Schreib-/Lesekopfs in dem RFID-Transponder 21 gespeichert. Bei einem Ausfall des Sensors 11' wird dieser aus der Halterung 17' entfernt und ein neuer Sensor 11' wird in die Halterung 17' eingesetzt. Der neu eingesetzte Sensor 11' parametriert sich dann selbständig, indem die in dem RFID-Transponder 21 abgespeicherten Werte für das Sichtfeld und die Scanrate ausgelesen und der Sensor 11' mittels der Einstelleinrichtung auf diese Werte gesetzt wird. Es ist dann kein neues Parametrieren des Sensors 11' erforderlich.

Je nach Anwendung ist auch eine Kombination einer automatischen Sensorausrichtung wie in Fig. 1 gezeigt und einer automatischen Parametereinstellung wie in Fig. 2 gezeigt denkbar. Ein Betreiber einer mit einer Sensoranordnung versehenen Industrieanlage muss somit bei Ausfall eines Sensors 11, 11' lediglich einen neuen Sensor 11, 11' in die zugehörige Halterung 17, 17' einsetzen und gegebenenfalls ein Inbetriebnahme-Signal erzeugen. Der weitere Justier- und Parametriervorgang erfolgt vollautomatisch, so dass also das Auswechseln eines Sensors 11, 11' weder besondere Kenntnisse erfordert noch mit einem hohen Zeitaufwand verbunden ist.

### Bezugszeichenliste

- 11, 11': Sensor
- 12, 12': Gehäuse
- 13: Sendelichtstrahlen
- 15: Empfangslichtstrahlen
- 17, 17': Halterung
- 18: Aufnahme
- 19: Verstelleinrichtung
- 21: RFID-Transponder
- 25: Sende-/Empfangseinheit der Halterung
- 27: Sende-/Empfangseinheit des Sensors
- 29: Kabelanschluss
- 30: Versorgungsleitung
- 31: Datenleitung

- OA: optische Achse

## Patentansprüche

1. Sensoranordnung mit
wenigstens einem, insbesondere optoelektronischen, Sensor (11, 11'), und
einer Halterung (17, 17'), an welcher der Sensor (11, 11') lösbar fixierbar ist, wobei
an der Halterung (17, 17') eine Speichereinrichtung (21) zum Ablegen von Informationen vorgesehen ist, wobei erste Kommunikationsmittel (25, 27) zum Übermitteln wenigstens einer sensorbezogenen Information des Sensors (11, 11') an die Halterung (17, 17') und zum Ablegen der übermittelten Information in der Speichereinrichtung (21) vorgesehen sind, und wobei zweite Kommunikationsmittel (25, 27) zum Auslesen einer abgelegten Information aus der Speichereinrichtung (21) und zum Übermitteln der ausgelesenen Information an eine Auswertungseinrichtung des Sensors (11, 11') oder der Halterung (17, 17') vorgesehen sind, wobei die Auswertungseinrichtung dazu ausgebildet ist,
in Abhängigkeit von der übermittelten Information wenigstens eine Abgleichfunktion am Sensor (11, 11') und/oder an der Halterung (17, 17') auszulösen,
**dadurch gekennzeichnet, dass**
das Auslösen der Abgleichfunktion ein Anpassen einer Ausrichtung des Sensors (11) relativ zu der Halterung (17) oder ein Anpassen einer Ausrichtung der Halterung (17) relativ zu einer ortsfesten Referenzfläche umfasst, wobei zum Anpassen der Ausrichtung eine Verstelleinrichtung (19) am Sensor (11) oder an der Halterung (17) vorgesehen ist, mittels welcher die Ausrichtung der Halterung (17) oder eines an der Halterung (17) fixierten Sensors (11) verstellbar ist.

2. Sensoranordnung nach Anspruch 1,
**dadurch gekennzeichnet, dass**
- die Auswertungseinrichtung dazu ausgebildet ist, die Abgleichfunktion lediglich bei Vorliegen eines Inbetriebnahme-Kriteriums auszulösen,
oder
- die Auswertungseinrichtung dazu ausgebildet ist, die Abgleichfunktion in Abhängigkeit eines Vergleichs einer aus der Speichereinrichtung (21) ausgelesenen Alt-Information und einer durch die ersten Kommunikationsmittel (25, 27) an die Halterung (17, 17') übermittelten Neu-Information auszulösen.

3. Sensoranordnung nach einem der vorstehenden Ansprüche,
**dadurch gekennzeichnet, dass**
- das Auslösen der Abgleichfunktion ein Anpassen eines Betriebsparameters des Sensors (11'), wie einer Scanrate, einer Scandichte und/oder eines Sichtfeldes, umfasst,
und/oder
- das Auslösen der Abgleichfunktion ein Darstellen einer durch die ersten Kommunikationsmittel (25, 27) oder die zweiten Kommunikationsmittel (25, 27) übermittelten Information und/oder einer aus der übermittelten Information abgeleiteten Auswertungs-Information auf einer Anzeige des Sensors (11, 11') und/oder der Halterung (17, 17') umfasst.

4. Sensoranordnung nach einem der vorstehenden Ansprüche, **dadurch gekennzeichnet, dass** Mittel zum Ablegen einer aktuellen Stellung der Verstelleinrichtung (19) in der Speichereinrichtung (21) vorgesehen sind.

5. Sensoranordnung nach einem der vorstehenden Ansprüche, **dadurch gekennzeichnet, dass**
- die Verstelleinrichtung (19) einen Antrieb aufweist und die Auswertungseinrichtung dazu ausgebildet ist, den Antrieb der Verstelleinrichtung in Abhängigkeit von einer durch die ersten Kommunikationsmittel oder die zweiten Kommunikationsmittel übermittelten Information anzusteuern,
oder
- die Verstelleinrichtung (19) manuell betätigbar ist und Mittel zum Ermitteln sowie zum Anzeigen der aktuellen Ausrichtung des Sensors (11) oder der Halterung (17) vorgesehen sind.

6. Sensoranordnung nach einem der vorstehenden Ansprüche, **dadurch gekennzeichnet, dass**
- die ersten Kommunikationsmittel (25, 27) und/oder die zweiten Kommunikationsmittel (25, 27) zum berührungslosen Übermitteln von Informationen ausgebildet sind,
und/oder
- die ersten Kommunikationsmittel (25, 27) und/oder die zweiten Kommunikationsmittel (25, 27) auf einer lokalen Funkverbindung zwischen dem Sensor (11) und der Halterung (17), insbesondere einer WLAN- oder einer NFC-Verbindung, beruhen,
oder
- die ersten Kommunikationsmittel und/oder die zweiten Kommunikationsmittel zum Übermitteln von Informationen über einander berührende Kontaktflächen des Sensors (11') und der Halterung (17') ausgebildet sind.

7. Sensoranordnung nach einem der vorstehenden Ansprüche,
**dadurch gekennzeichnet, dass**
- die Speichereinrichtung (21) wenigstens einen RFID-Transponder umfasst, welcher vorzugsweise direkt auf die Halterung (17, 17') aufgebracht ist und/oder welcher vorzugsweise durch eine kombinierte Schreib-/Leseeinheit des Sensors (11, 11') beschreibbar und auslesbar ist,
oder
- die Speichereinrichtung eine auswechselbare Speicherkarte, insbesondere eine SD-Karte, umfasst, welche in eine Kartenaufnahme der Halterung (17, 17') einführbar ist.

8. Sensoranordnung nach einem der vorstehenden Ansprüche,
**dadurch gekennzeichnet, dass**
die Halterung (17, 17') einen, insbesondere als Kabelanschluss ausgeführten, Stromanschluss (29) zur Versorgung des Sensors (11, 11') mit elektrischer Energie aufweist.

9. Sensoranordnung nach Anspruch 8,
**dadurch gekennzeichnet, dass**
die zweiten Kommunikationsmittel zusätzlich dazu ausgebildet sind, elektrische Energie von dem Stromanschluss (29) der Halterung (17, 17') zu einer Versorgungseinheit des Sensors (11, 11') zu übertragen.

10. Sensoranordnung nach einem der vorstehenden Ansprüche,
**dadurch gekennzeichnet, dass**
die Halterung (17, 17') einen, insbesondere als Kabelanschluss ausgeführten, Applikationsdatenanschluss (29) zur Übermittlung von anwendungsspezifischen Daten an den Sensor (11, 11') aufweist, wobei die ersten Kommunikationsmittel zusätzlich dazu ausgebildet sind, anwendungsspezifische Daten von dem Applikationsdatenanschluss (29) der Halterung (17, 17') zu einer Empfangseinheit des Sensors (11, 11') zu übertragen.

11. Sensoranordnung nach einem der vorstehenden Ansprüche,
**dadurch gekennzeichnet, dass**
die ersten Kommunikationsmittel zusätzlich dazu ausgebildet sind, von dem Sensor (11, 11') ermittelte Messdaten an einen an der Halterung (17, 17') vorgesehenen, insbesondere als Kabelanschluss ausgeführten, Messdatenanschluss (29) zu übertragen, wobei der Messdatenanschluss (29) zur Weiterleitung der Messdaten an eine nachgeordnete Verarbeitungseinrichtung ausgebildet ist.

12. Sensoranordnung nach einem der vorstehenden Ansprüche,
**dadurch gekennzeichnet, dass**
die Halterung (17') eine Aufnahme (18) für ein Gehäuse (12') des Sensors (11') aufweist.

13. Sensoranordnung nach einem der vorstehenden Ansprüche,
**dadurch gekennzeichnet, dass**
wenigstens zwei Sensoren an der Halterung lösbar fixierbar sind.

## Claims

1. A sensor arrangement comprising
at least one sensor (11, 11'), in particular an optoelectronic sensor; and
a holder (17, 17') to which the sensor (11, 11') is releasably fixable, wherein
a memory device (21) is provided at the holder (17, 17') for the storing of information; wherein
first communication means (25, 27) are provided for transmitting at least one sensor-related information of the sensor (11, 11') to the holder (17, 17') and for storing the transmitted information in the memory device (21); and wherein
second communication means (25, 27) are provided for reading stored information from the memory device (21) and for transmitting the read-out information to an evaluation device of the sensor (11, 11') or of the holder (17, 17'), wherein the evaluation device is configured
to trigger at least one comparison function at the sensor (11, 11') and/or at the holder (17, 17') in dependence on the transmitted information,
**characterized in that**
the triggering of the comparison function comprises an adaptation of an alignment of the sensor (11) relative to the holder (17) or an adaptation of an alignment of the holder (17) relative to a fixed-position reference surface, with an adjustment device (19) for adapting the alignment being provided at the sensor (11) or at the holder (17), by means of which adjustment device the alignment of the holder (17) or of a sensor (11) fixed to the holder (17) is adjustable.

2. A sensor arrangement in accordance with claim 1, **characterized in that**
- the evaluation device is configured only to trigger the comparison function on a presence of a criterion for putting into operation;
or
- the evaluation device is configured to trigger the comparison function in dependence on a comparison of old information read out of the memory device (21) and new information transmitted to the holder (17, 17') by the first communication means (25, 27).

3. A sensor arrangement in accordance with one of the preceding claims,
**characterized in that**
- the triggering of the comparison function comprises an adaptation of an operating parameter of the sensor (11') such as a scan rate, a scan density and/or of a field of view;
and/or
- the triggering of the comparison function comprises a representation of information transmitted by the first communication means (25, 27) or by the second communication means (25, 27) and/or of evaluation information derived from the transmitted information on a display of the sensor (11, 11') and/or of the holder (17, 17').

4. A sensor arrangement in accordance with any one of the preceding claims,
**characterized in that**
means are provided for storing a current position of the adjustment device (19) in the memory device (21).

5. A sensor arrangement in accordance with any one of the preceding claims,
**characterized in that**
- the adjustment device (19) has a drive and the evaluation device is configured to control the drive of the adjustment device in dependence on information transmitted by the first communication means or by the second communication means;
or
- the adjustment device (19) is manually adjustable and means are provided for determining and for displaying the current alignment of the sensor (11) or of the holder (17).

6. A sensor arrangement in accordance with any one of the preceding claims,
**characterized in that**
- the first communication means (25, 27) and/or the second communication means (25, 27) are configured for a contactless transmission of information;
and/ or
- the first communication means (25, 27) and/or the second communication means (25, 27) are based on a local radio connection between the sensor (11) and the holder (17), in particular on a WLAN connection or an NFC connection;
or
- the first communication means and/or the second communication means are configured for transmitting information via mutually touching contact surfaces of the sensor (11') and of the holder (17').

7. A sensor arrangement in accordance with any one of the preceding claims,
**characterized in that**
- the memory device (21) comprises at least one RFID transponder which is preferably attached directly to the holder (17, 17') and/or which is preferably writable and readable by a combined writing/reading unit of the sensor (11, 11');
or
- the memory device comprises a reliable memory card, in particular an SD card, which can be introduced into a card receiver of the holder (17, 17').

8. A sensor arrangement in accordance with any one of the preceding claims,
**characterized in that**
the holder (17, 17') has a power connection (29), in particular designed as a cable connection, for supplying the sensor (11, 11') with electric energy.

9. A sensor arrangement in accordance with claim 8,
**characterized in that**
the second communication means are additionally configured to transfer electric energy from the power connection (29) of the holder (17, 17') to a supply unit of the sensor (11, 11').

10. A sensor arrangement in accordance with any one of the preceding claims,
**characterized in that**
the holder (17, 17') has an application data connection (29), in particular designed as a cable connection, for transmitting application-specific data to the sensor (11, 11'), with the first communication means additionally being configured to transfer application-specific data from the application data connection (29) of the holder (17, 17') to a reception unit of the sensor (11, 11').

11. A sensor arrangement in accordance with any one of the preceding claims,
**characterized in that**
the first communication means are additionally configured to transmit measured data determined by the sensor (11, 11') to a measured data connection (29) provided at the holder (17, 17') and in particular designed as a cable connection, with the measured data connection (29) being configured for forwarding the measured data to a downstream processing device.

12. A sensor arrangement in accordance with any one of the preceding claims,
**characterized in that**
the holder (17') has a mount (18) for a housing (12') of the sensor (11').

13. A sensor arrangement in accordance with any one of the preceding claims,
**characterized in that**
at least two sensors are releasably fixable to the holder.

## Revendications

1. Agencement formant capteur comprenant
au moins un capteur (11, 11'), en particulier un capteur optoélectronique, et
une monture (17, 17') sur laquelle le capteur (11, 11') peut être fixé de façon détachable, dans lequel
un dispositif à mémoire (21) pour la mémorisation d'informations est prévu sur la monture (17, 17'), dans lequel
il est prévu un premier moyen de communication (25, 27) pour transmettre au moins une information propre au capteur (11, 11') à la monture (17, 17') et pour mémoriser dans le dispositif à mémoire (21) l'information transmise, et
il est prévu un second moyen de communication (25, 27) pour lire à partir du dispositif à mémoire (21) une information mémorisée et pour transmettre l'information lue à un système d'évaluation du capteur (11, 11') ou de la monture (17, 17'),
et le système d'évaluation est réalisé pour déclencher, en fonction de l'information transmise, au moins une fonction de compensation au niveau du capteur (11, 11') et/ou au niveau de la monture (17, 17'),
**caractérisé en ce que**
le déclenchement de la fonction de compensation inclut une adaptation d'une orientation du capteur (11) par rapport à la monture (17) ou une adaptation d'une orientation de la monture (17) par rapport à une surface de référence stationnaire, dans lequel pour l'adaptation de l'orientation, il est prévu un moyen de réglage (19) au niveau du capteur (11) ou au niveau de la monture (17), au moyen duquel l'orientation de la monture (17) ou d'un capteur (11) fixé sur la monture (17) est réglable.

2. Agencement formant capteur selon la revendication 1,
**caractérisé en ce que**
- le système d'évaluation est réalisé pour déclencher la fonction de compensation uniquement en présence d'un critère de mise en fonctionnement,
ou bien
- le système d'évaluation est réalisé pour déclencher la fonction de compensation en fonction d'une comparaison d'une information ancienne lue depuis le dispositif à mémoire (21) et d'une information nouvelle transmise par le premier moyen de communication (25, 27) à la monture (17, 17').

3. Agencement formant capteur selon l'une des revendications précédentes,
**caractérisé en ce que**
- le déclenchement de la fonction de compensation inclut une adaptation d'un paramètre de service du capteur (11'), comme une cadence de palpage, une densité de palpage et/ou un champ de vision,
et/ou
- le déclenchement de la fonction de compensation inclut une représentation d'une information transmise par le premier moyen de communication (25, 27) ou par le second moyen de communication (25, 27) et/ou d'une information d'évaluation dérivée depuis l'information transmise, sur un affichage du capteur (11, 11') et/ou de la monture (17, 17').

4. Agencement formant capteur selon l'une des revendications précédentes,
**caractérisé en ce qu'**il est prévu un moyen pour mémoriser dans le dispositif à mémoire (21) une position actuelle du dispositif de réglage (19).

5. Agencement formant capteur selon l'une des revendications précédentes,
**caractérisé en ce que**
- le dispositif de réglage (19) comprend un entraînement et le système d'évaluation est réalisé pour piloter l'entraînement du dispositif de réglage en fonction d'une information transmise par le premier moyen de communication ou par le second moyen de communication,
ou bien
- le dispositif de réglage (19) peut être actionné manuellement et il est prévu un moyen pour déterminer et pour afficher l'orientation actuelle du capteur (11) ou de la monture (17).

6. Agencement formant capteur selon l'une des revendications précédentes,
**caractérisé en ce que**
- le premier moyen de communication (25, 27) et/ou le second moyen de communication (25, 27) est réalisé pour la transmission d'informations sans contact,
et/ou
- le premier moyen de communication (25, 27) et/ou le second moyen de communication (25, 27) sont basés sur une liaison radio locale entre le capteur (11) et la monture (17), en particulier une liaison Wi-Fi ou une liaison NFC,
ou bien
- le premier moyen de communication et/ou le second moyen de communication est réalisé pour transmettre des informations relatives à des surfaces de contact en contact mutuel du capteur (11') et de la monture (17').

7. Agencement formant capteur selon l'une des revendications précédentes,
**caractérisé en ce que**
- le dispositif à mémoire (21) inclut au moins un transpondeur RFID, qui est de préférence monté directement sur la monture (17, 17') et/ou qui peut de préférence être écrit et lu par une unité combinée d'écriture/lecture du capteur (11, 11'),
ou bien
- le dispositif à mémoire inclut une carte mémoire interchangeable, en particulier une carte SD, qui peut être introduite dans un logement de carte de la monture (17, 17').

8. Agencement formant capteur selon l'une des revendications précédentes,
**caractérisé en ce que** la monture (17, 17') comprend un connecteur électrique (29) réalisé en particulier sous forme de connecteur à câble pour l'alimentation du capteur (11, 11') avec de l'énergie électrique.

9. Agencement formant capteur selon la revendication 8,
**caractérisé en ce que** le second moyen de communication est réalisé en supplément pour transmettre de l'énergie électrique depuis le connecteur électrique (29) de la monture (17, 17') à une unité d'alimentation du capteur (11, 11').

10. Agencement formant capteur selon l'une des revendications précédentes,
**caractérisé en ce que** la monture (17, 17') comprend un connecteur de données d'application (29), réalisé en particulier sous forme de connecteur à câble, pour la transmission au capteur (11, 11') de données spécifiques à une application,
dans lequel le premier moyen de communication est en outre réalisé pour transmettre des données spécifiques à l'application depuis le connecteur de données d'application (29) de la monture (17, 17') à une unité de réception du capteur (11, 11').

11. Agencement formant capteur selon l'une des revendications précédentes,
**caractérisé en ce que** le premier moyen de communication est en outre réalisé pour transmettre des données de mesure déterminées par le capteur (11, 11') à un connecteur de données de mesure (29) prévu sur la monture et réalisé en particulier sous forme de connecteur à câble, dans lequel le connecteur de données de mesure (29) est réalisé pour transférer les données de mesure à un système de traitement disposé à la suite.

12. Agencement formant capteur selon l'une des revendications précédentes,
**caractérisé en ce que** la monture (17') comprend un logement (18) pour un boîtier (12') du capteur (11').

13. Agencement formant capteur selon l'une des revendications précédentes,
**caractérisé en ce qu'**au moins deux capteurs sont susceptibles d'être fixés de façon détachable sur la monture.
